# EUROPEAN PATENT SPECIFICATION

(11) **EP 2 829 522 B1**
(45) Date of publication and mention of the grant of the patent: **19.09.2018**
(21) Application number: 12872020.8
(22) Date of filing: 17.12.2012
(51) Int. Cl.: C03B 37/027, C03C 13/04

(54) **METHOD FOR PRODUCING OPTICAL FIBER**
VERFAHREN ZUR HERSTELLUNG VON GLASFASERN
PROCÉDÉ DE FABRICATION D'UNE FIBRE OPTIQUE

(30) Priority: 21.03.2012 JP 2012063960
(43) Date of publication of application: 28.01.2015
(73) Proprietor: Sumitomo Electric Industries, Ltd., Osaka-shi, Osaka 541-0041 (JP)
(72) Inventor: HARUNA, Tetsuya, Yokohama-shi Kanagawa 244-8588 (JP); HIRANO, Masaaki, Yokohama-shi Kanagawa 244-8588 (JP); TAMURA, Yoshiaki, Yokohama-shi Kanagawa 244-8588 (JP)
(74) Representative: Hoffmann Eitle
(86) International application number: PCT/JP2012/082658
(87) International publication number: WO 2013/140688

(56) References cited:
- EP-A1- 2 481 716
- EP-A2- 2 511 741
- WO-A2-2005/021455
- JP-A- 2004 126 148
- JP-A- 2007 504 080

## Description

### TECHNICAL FIELD

The present invention relates to a method for producing an optical fiber.

### BACKGROUND ART

Optical fibers including cores that contain alkali metal elements are known (see Japanese Unexamined Patent Publication (Translation of PCT Application) Nos. 2005-537210, 2007-504080, 2008-536190, 2009-541796, 2010-501894, and 2010-526749, U.S.

Patent Application Publication No. 2006/0130530, U.S. Pat. No. 5146534, and International Publication No. 98/002389). It is believed that the incorporation of an alkali metal element into a core reduces the viscosity of the core in drawing an optical fiber preform to produce an optical fiber and allows the relaxation of the glass network structure to proceed, thereby reducing the attenuation of the optical fiber.

WO 2005/021455 A2 describes an optical fiber having a core with an alkali metal oxide dopant in a peak amount greater than about 0.002 wt. % and less than about 0.1 wt. %. The alkali metal oxide concentration varies with a radius of the optical fiber. By appropriately selecting the concentration of alkali metal oxide dopant in the core and the cladding, a low loss optical fiber may be obtained.

EP 2 511 741 A2 is directed to an optical fiber preform which has a core portion having a first core portion including a central axis, a second core portion disposed around the first core portion, and a third core portion disposed around the second core portion. The first core portion contains 10 atomic ppm or more of an alkali metal and 10 to 600 atomic ppm of chlorine, the second core portion contains 10 atomic ppm or less of the alkali metal and 10 to 600 atomic ppm of chlorine, and the third core portion contains 10 atomic ppm or less of the alkali metal and 2,000 atomic ppm or more of chlorine. EP 2 511 741 A1 is also directed to an optical fiber having a core region doped with an alkali metal and chlorine, wherein the minimum concentration of chlorine in the core region is 1,000 atomic ppm or more, and the average concentration of the alkali metal therein is 0.2 atomic ppm or more.

EP 2 481 716 A1 deals with a method for producing an optical fiber preform used in producing an optical fiber having low attenuation. The production method includes (1) a rod formation step of forming a glass rod of a silica glass containing an alkali metal element, the average concentration of the alkali metal element being 5 at.ppm or more, (2) a heat treatment step of heat-treating the glass rod, (3) a core part formation step of forming an alkali metal element-free silica glass layer having a chlorine concentration of 6000 at.ppm or more around the perimeter of the glass rod heat-treated in the heat treatment step to form a core part including the glass rod and the silica glass layer, and (4) a cladding part formation step of forming a cladding part of a silica-based glass having a lower refractive index than the core part around the perimeter of the core part.

In addition, optical fibers including cores that are composed of pure silica glass free from an alkali metal element are known as other low-loss optical fibers. It is known that in the production of such an optical fiber, an annealing furnace is arranged below a drawing furnace to prolong the heating time in order to promote the relaxation of the glass network structure.

### SUMMARY OF THE INVENTION

### Technical Problem

It is an object of the present invention to provide a method for producing an optical fiber including a core that contains an alkali metal element, the optical fiber having low attenuation.

### Solution to Problem

In order to achieve the object, a method for producing an optical fiber includes drawing a silica-based optical fiber preform into an optical fiber, the optical fiber preform including a core part and a cladding part, the core part containing a halogen element and and an alkali metal element, the cladding part containing fluorine and chlorine, the optical fiber including a glass portion and a resin coating portion, wherein a force applied to the glass portion during the drawing is in the range of 0.29 N to 1.47 N, and the average concentration of an additive element other than the alkali metal element or the halogen atom in the core part is equal to or lower than the average concentration of the halogen element in the core part, characterized in that the core part of the optical fiber preform has an average concentration of an alkali metal element of 5 atomic ppm or more and 500 atomic ppm or less, that, in the drawing of the optical fiber preform, the time during which an individual position of the optical fiber preform is maintained at 1500°C or higher is 110 minutes or less, and that the core of the glass portion of the optical fiber preform is under residual stress which is a compressive stress of 130 MPa or less.

In the method for producing an optical fiber according to the present invention, the average concentration of the halogen element in the core part of the optical fiber preform is preferably in the range of 1,000 atomic ppm to 20,000 atomic ppm. The alkali metal element may be potassium.

In the method for producing an optical fiber according to the present invention, the drawing speed during the drawing of the optical fiber preform may be 1200 m/min or more or 2500 m/min or less. The optical fiber preform preferably has a diameter of 70 mm to 170 mm.

In the method for producing an optical fiber according to the present invention, during the drawing of the optical fiber preform, the drawn glass fiber having a diameter of 200 µm or less may be heated at 1500°C or higher for 0.3 seconds or less, and the residence time in which the optical fiber preform is heated in a drawing furnace is 4 hours or less. The drawn glass fiber having a diameter of 200 µm or less may be heated at 1500°C or higher for 0.01 seconds or more. In the drawing of the optical fiber preform, the residence time of any position of the optical fiber preform in the drawing furnace may be 4 hours or less.

### Advantageous Effect of the Invention

According to an embodiment of the present invention, it is possible to produce an optical fiber having low attenuation, the optical fiber including a core that contains an alkali metal element.

### BRIEF DESCRIPTION OF DRAWINGS

Figure 1, area (a) is a graph illustrating a refractive index profile and a concentration distribution of an alkali metal element of an optical fiber preform, and Fig. 1, area (b) is a graph illustrating a refractive index profile, a concentration distribution of an alkali metal element, and an optical power distribution of an optical fiber.
Figure 2 is a graph illustrating the relationship between the length of time during which an individual position of an optical fiber preform is maintained at 1500°C or higher in a drawing furnace and the attenuation of an optical fiber at a wavelength of 1.55 µm.
Figure 3 is a conceptual view of a drawing apparatus.
Figure 4 is a conceptual view illustrating time during which an individual position of an optical fiber preform is maintained at 1500°C or higher in a drawing apparatus.
Figure 5 is a conceptual view illustrating residence time in the drawing furnace of the drawing apparatus.
Figure 6 is a graph illustrating the relationship between the drawing speed and the attenuation of an optical fiber at a wavelength of 1.55 µm.
Figure 7 is a graph illustrating the relationship between the drawing speed and the attenuation of an optical fiber at a wavelength of 1.55 µm.
Figure 8 is a graph illustrating the relationship between the diameter of an optical fiber preform and the attenuation of an optical fiber at a wavelength of 1.55 µm.
Figure 9 is a graph illustrating the relationship between the residence time in a drawing furnace and the attenuation of an optical fiber at a wavelength of 1.55 µm.
Figure 10 is a graph illustrating the refractive index profile of an optical fiber.
Figure 11 is a graph illustrating the refractive index profile of an optical fiber.
Figure 12 is a conceptual view illustrating other examples of the refractive index profile of an optical fiber.
Figure 13 is a graph illustrating a residual stress in a glass portion of an optical fiber with a force applied to glass during drawing as a parameter.
Figure 14 is a conceptual view illustrating a residual stress of an optical fiber.
Figure 15 is a conceptual view illustrating another drawing apparatus.

### DESCRIPTION OF EMBODIMENTS

Embodiments of the present invention will be described below with reference to the attached drawings. The drawings are provided for illustrative purposes and are not intended to limit the scope of the invention. In the drawings, the same elements are designated using the same reference numerals, and redundant description is not repeated. The ratios of dimensions in the drawings are not always the same as those of the actual objects described in the respective drawings.

According to findings of the inventors, in the case of producing an optical fiber including a core that contains an alkali metal element, when a heating time is prolonged by arranging an annealing furnace below a drawing furnace as in the production of an optical fiber including the core composed of pure silica, the resulting optical fiber has an increased attenuation, in some cases. Thus, in a method for producing an optical fiber according to the present invention, when an optical fiber preform including a core part that contains an alkali metal element is drawn, a time that the optical fiber preform is heated in a drawing furnace is reduced.

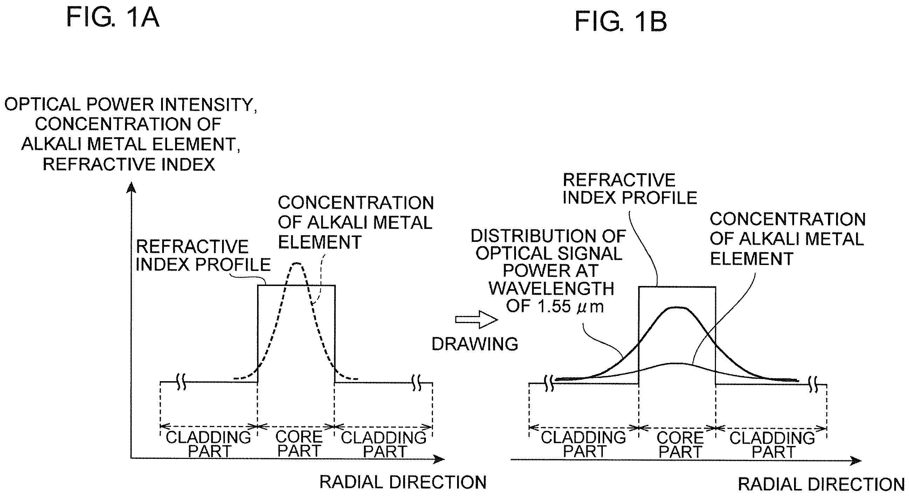

Figure 1, area (a) is a graph illustrating a refractive index profile and a concentration distribution of an alkali metal element of an optical fiber preform. Figure 1, area (b) is a graph illustrating a refractive index profile, a concentration distribution of an alkali metal element, and an optical power distribution of an optical fiber. A mechanism for a reduction in the attenuation of an optical fiber when the heating time during drawing is short is unclear and is thought as follows: A prolonged heating time during drawing allows the diffusion of an alkali metal element incorporated into a core part to proceed, so that the alkali metal element diffuses widely to extend outwardly to a position three or more times the mode field diameter (MFD) of a communication wavelength region (1550-nm band). As illustrated in Fig. 1, area (B), the effective concentration of the alkali metal element is thus reduced in the core of the optical fiber. Thereby, the relaxation of the glass network structure does not proceed, thus failing to reduce the attenuation of the optical fiber.

In a method for producing an optical fiber according to an embodiment of the present invention, the average concentration of an alkali metal element (for example, potassium) contained in a core part of an optical fiber preform is 5 atomic ppm or more and preferably 50 atomic ppm or less in order to suitably achieve a reduction in loss. A higher potassium concentration results in a higher loss due to radiation exposure. Thus, the upper limit of the average potassium concentration in the core part is 500 atomic ppm. The time during which an individual position of the optical fiber preform is maintained at 1500°C or higher in a drawing furnace is 110 minutes or less. The drawing speed is preferably 1200 m/min or more and more preferably 1500 m/min to 2300 m/min. The optical fiber preform preferably has a diameter of 70 mm to 170 mm and more preferably 90 mm to 150 mm.

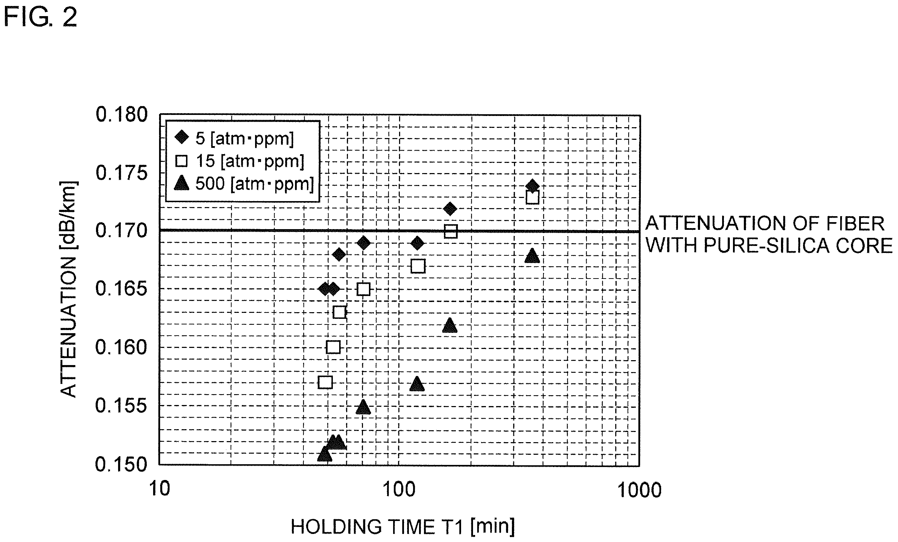

Figure 2 is a graph illustrating the relationship between time T₁ during which the individual position of the optical fiber preform is maintained at a temperature of 1500°C or higher in a drawing apparatus and the attenuation of an optical fiber at a wavelength of 1.55 µm with the average potassium concentration in a core part of an optical fiber preform as a parameter. Attenuations at measurement points are described in Table I.

**Table I**

| Holding time T₁ | Attenuation dB/km | | |
|---|---|---|---|
| | Average potassium concentration 5 atm·ppm | Average potassium concentration 15 atm·ppm | Average potassium concentration 500 atm·ppm |
| 360 | 0.174 | 0.173 | 0.168 |
| 163 | 0.172 | 0.170 | 0.162 |
| 119 | 0.169 | 0.167 | 0.157 |
| 71 | 0.169 | 0.165 | 0.155 |
| 56 | 0.168 | 0.163 | 0.152 |
| 53 | 0.165 | 0.160 | 0.152 |
| 49 | 0.165 | 0.157 | 0.151 |

In this case, the optical fiber preform had a diameter of 140 mm. The drawing tension (applied to the glass portion) during the drawing of the optical fiber preform was 30 g (0.29N) to 150 g (1.47 N). The glass fiber having a diameter of 200 µm or less was heated at 1500°C or higher for 0.01 seconds to 0.3 seconds.

The drawn optical fiber includes a glass portion and a resin coating portion (fiber coating) and the glass portion includes a core composed of a silica-based glass containing potassium, chlorine (Cl), and fluorine. The cladding part is composed of a silica-based glass containing fluorine and Cl. The core had an average potassium concentration of 0.1 atomic ppm to 100 atomic ppm. The core of the drawn optical fiber had an average chlorine concentration of about 10,000 atomic ppm. The core does not substantially contain dopants, such as a transition metal and GeO₂, other than potassium, chlorine, and fluorine. The concentration of the dopants other than potassium, chlorine, and fluorine in the core part is 1 ppm or less.

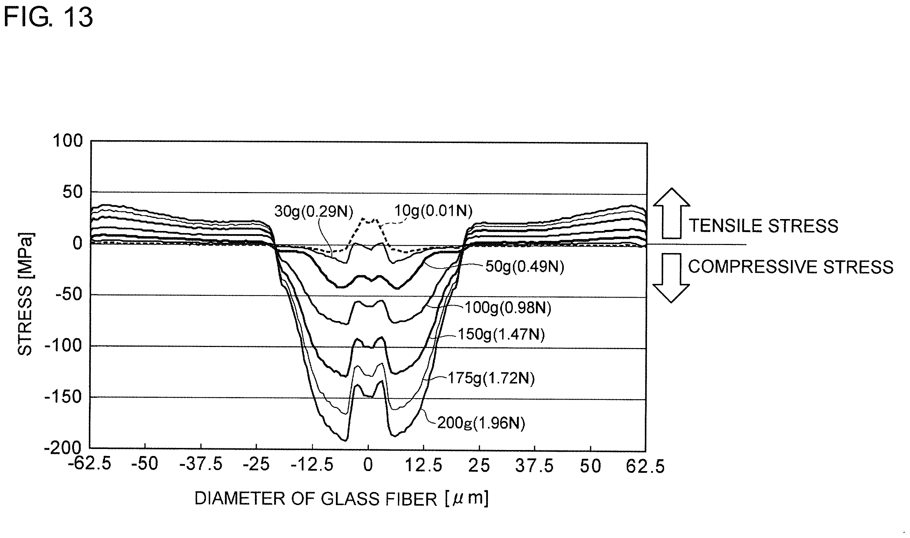

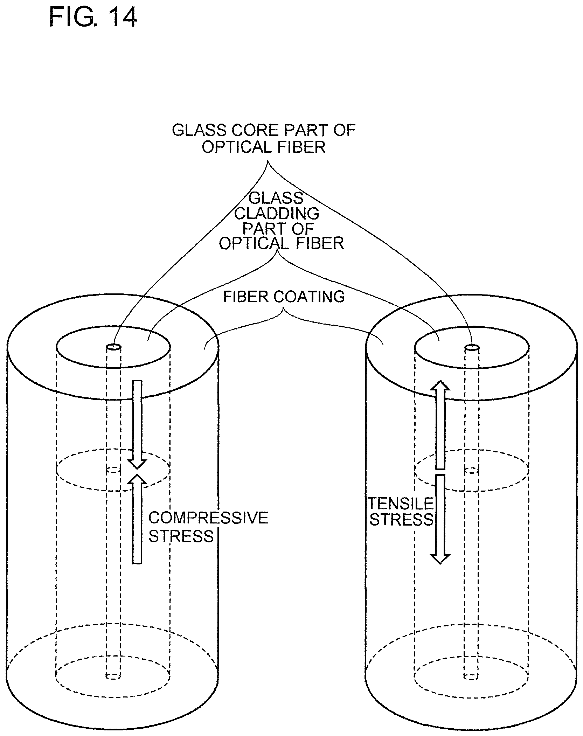

When the drawing tension during the drawing of the optical fiber preform is higher or lower than the range of 30 g (0.29 N) to 150 g (1.47 N), the attenuation of the optical fiber is increased. Figure 13 illustrates a residual stress in a glass portion of an optical fiber drawn from an optical fiber preform that includes a core part having an average potassium concentration of 5 atomic ppm with a force applied to glass during drawing as a parameter. A negative stress value indicates a compressive residual stress. A positive stress value indicates a tensile residual stress. As illustrated in Fig. 14, the stress remains in the longitudinal direction when the fiber is regarded as a cylinder.

As illustrated in Fig. 13, an increase in tension results in an increase in compressive stress in the core and peripheral portion of the core of the optical fiber. For example, the compressive stress values at the center portion of the core are -4 MPa at a force applied to a glass portion of 30 g (0.29 N) and -148 MPa at 200 g (1.96 N). Meanwhile, when the force applied to the glass portion is reduced to 10 g (0.098 N), a tensile stress remains in the core which guides an optical signal. Thus, a peripheral glass portion including the core is stretched to increase the amount of glass defects, thereby disadvantageously increase the attenuation. Furthermore, from a production point of view, a reduction in tension applied to the glass is liable to cause the fiber to sway below the drawing furnace, thereby easily breaking the fiber. Accordingly, drawing under low tension to the glass is not suitable from the viewpoint of yield.

An increase in tension applied to the glass increases the amount of residual stress change around the core. For example, the maximum amount of stress change per micrometer in a region extending from the center of the core to a radius of 15 µm (the region with a diameter of three times the MFD) is 16 MPa/µm at a force applied to the glass of 150 g (1.47 N). However, the maximum amounts of stress change per micrometer are 25 and 23 MPa/µm at 175 g (1.72 N) and 200 g (1.96 N), respectively. That is, the change in stress is significantly increased in the radial direction. This leads to a nonuniform glass structure, thereby disadvantageously increasing the attenuation. Accordingly, an optimum force applied to the glass during drawing is in the range of 30 g (0.29 N) to 150 g (1.47 N). At this time, the peripheral portion of the core is under residual stress that is a compressive stress of 0 MPa to 130 MPa.

Figure 2 demonstrates that a reduction in the time T₁ during which the individual position of the optical fiber preform is maintained at 1500°C or higher results in a reduction in the attenuation of the optical fiber at a wavelength of 1.55 µm. In the case where the core part of an optical fiber preform has an average potassium concentration of 500 atomic ppm or less, the fictive temperature of an optical fiber formed by drawing the optical fiber preform is in the range of 1400°C to 1550°C. The diffusion of potassium proceeds in the drawing furnace during the time the glass is maintained at a temperature between the peak temperature (1500°C or higher) and 1500°C. When potassium is excessively diffused, potassium is widely distributed even in a region outside an optical power distribution in the communication wavelength band (1550-nm band). As a result, the effective potassium concentration is reduced, so that the relaxation of the glass network structure does not proceed, failing to reduce the attenuation of the optical fiber. It is thus believed that when the time the glass temperature is maintained at 1500°C or higher, at which the diffusion of potassium is more likely to proceed, is reduced, the optical attenuation is reduced. As illustrated in Fig. 2 and Table I, in order to achieve an attenuation of less than 0.170 dB/km, which is the attenuation of a pure-silica core optical fiber including a core part free from an alkali metal element, the length of time during which the individual position of the optical fiber preform is maintained at 1500°C or higher needs to be 110 minutes or less and preferably 70 minutes or less.

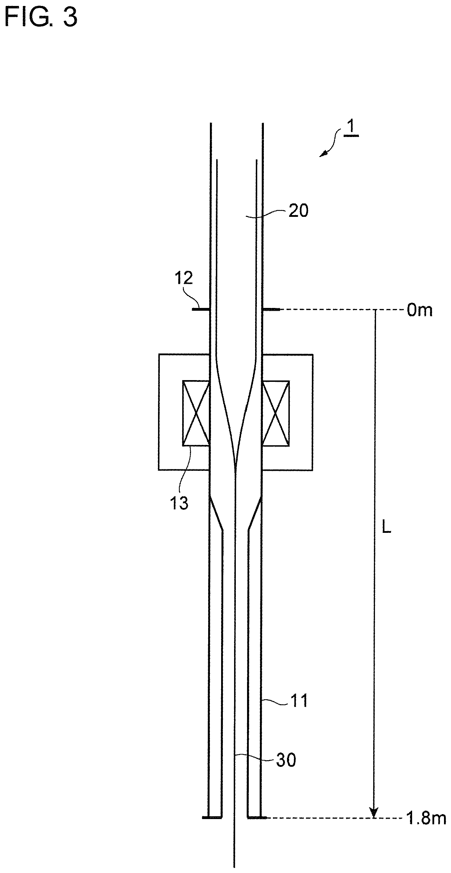

Figure 3 is a conceptual view of a drawing apparatus 1. The drawing apparatus 1 includes a drawing furnace 11 and a heater 13 arranged around the drawing furnace 11. In the drawing apparatus 1, the lower end of an optical fiber preform 20 inserted from the top is melted by heating and drawn to produce an optical fiber 30. The drawing furnace 11 is filled with a He atmosphere. Length L (length from an upper flange 12 to the lower end) is, for example, 1.8 m.

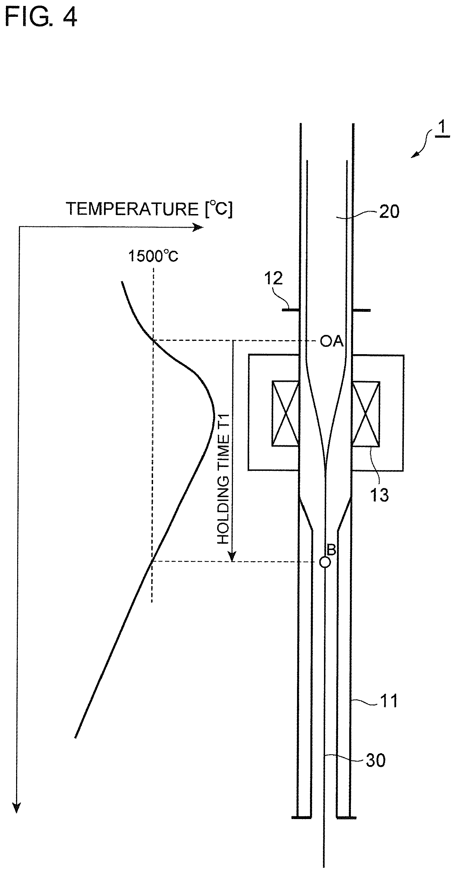

Figure 4 is a conceptual view illustrating time T₁ during which the individual position of the optical fiber preform is maintained at 1500°C or higher in the drawing apparatus 1. With respect to the glass temperature distribution in the drawing apparatus 1, the maximum temperature is obtained at a position where the heater 13 is arranged. The temperature decreases with increasing distance from the position. Time T₁ during which the individual position of the optical fiber preform is maintained at 1500°C or higher is defined as the length of time from the time when a temperature at position A of the optical fiber preform 20 is increased to reach 1500°C to the time when position A descends, by drawing, to position B at which the temperature is reduced from the maximum temperature to 1500°C at a position B.

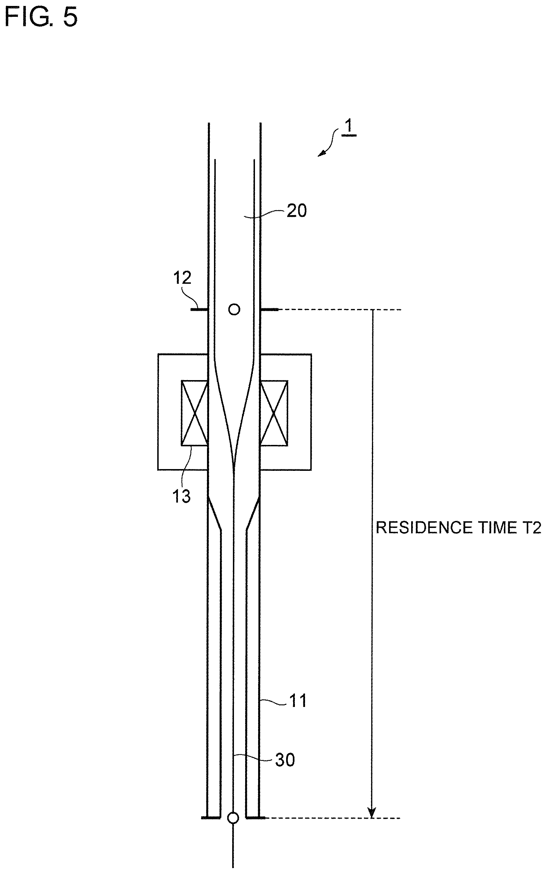

Figure 5 is a conceptual view illustrating residence time T₂ in the drawing furnace of the drawing apparatus 1. Residence time T₂ in the drawing furnace of the drawing apparatus 1 is defined as the length of time from the time when a position of the optical fiber preform 20 passes through the upper flange 12 to the time when the position passes through the lower end of the drawing furnace 11 by drawing.

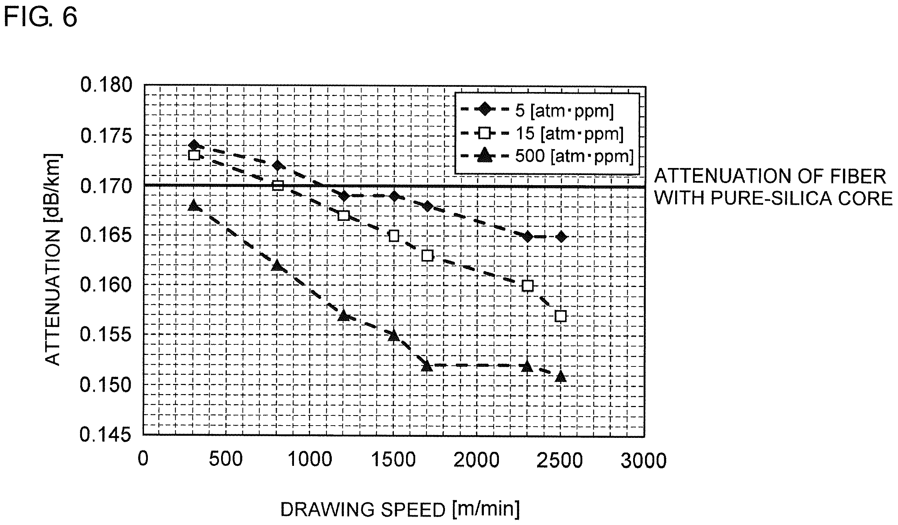

Figure 6 is a graph illustrating the relationship between the drawing speed and the attenuation of an optical fiber at a wavelength of 1.55 µm with the average potassium concentration in a core of an optical fiber preform as a parameter. Attenuations at measurement points are described in Table II.

**Table II**

| Drawing speed m/min | Attenuation dB/km | | |
|---|---|---|---|
| | Average potassium concentration 5 atm·ppm | Average potassium concentration 15 atm·ppm | Average potassium concentration 500 atm ppm |
| 300 | 0.174 | 0.173 | 0.168 |
| 800 | 0.172 | 0.170 | 0.162 |
| 1200 | 0.169 | 0.167 | 0.157 |
| 1500 | 0.169 | 0.165 | 0.155 |
| 1700 | 0.168 | 0.163 | 0.152 |
| 2300 | 0.165 | 0.160 | 0.152 |
| 2500 | 0.165 | 0.157 | 0.151 |

Also in this case, the optical fiber preform had a diameter of 140 mm.

As illustrated in Fig. 6, in order to achieve an attenuation of less than 0.170 dB/km, which is the attenuation of a pure-silica core optical fiber including a core free from an alkali metal element, in the case where the core part of the optical fiber preform has an average potassium concentration of 5 atomic ppm, the drawing speed needs to be at least 1200 m/min or more and preferably 1500 m/min.

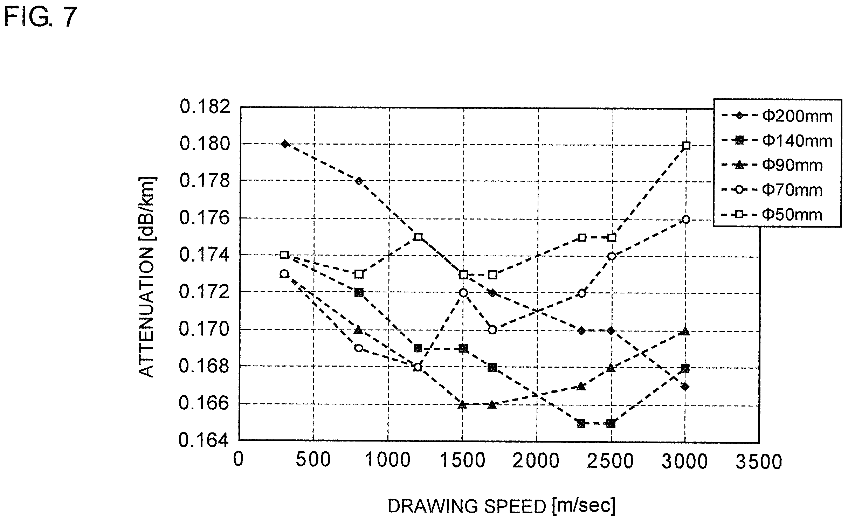

An optical fiber preform is drawn with the drawing apparatus 1 illustrated in Fig. 3. The drawing furnace 11 has a length of 1.8 m. Figure 7 is a graph illustrating the relationship between the drawing speed and the attenuation of an optical fiber at a wavelength of 1.55 µm with the diameter of the optical fiber preform as a parameter. Attenuations at measurement points are described in Table III.

**Table III**

| Drawing speed m/min | Attenuation dB/km | | | | |
|---|---|---|---|---|---|
| | 200 (mm, in diameter) | 140 (mm, in diameter) | 90 (mm, in diameter) | 70 (mm, in diameter) | 50 (mm, in diameter) |
| 300 | 0.180 | 0.174 | 0.173 | 0.173 | 0.174 |
| 800 | 0.178 | 0.172 | 0.170 | 0.169 | 0.173 |
| 1200 | 0.175 | 0.169 | 0.168 | 0.168 | 0.175 |
| 1500 | 0.173 | 0.169 | 0.166 | 0.172 | 0.173 |
| 1700 | 0.172 | 0.168 | 0.166 | 0.170 | 0.173 |
| 2300 | 0.170 | 0.165 | 0.167 | 0.172 | 0.175 |
| 2500 | 0.170 | 0.165 | 0.168 | 0.174 | 0.175 |
| 3000 | 0.167 | 0.168 | 0.170 | 0.176 | 0.180 |

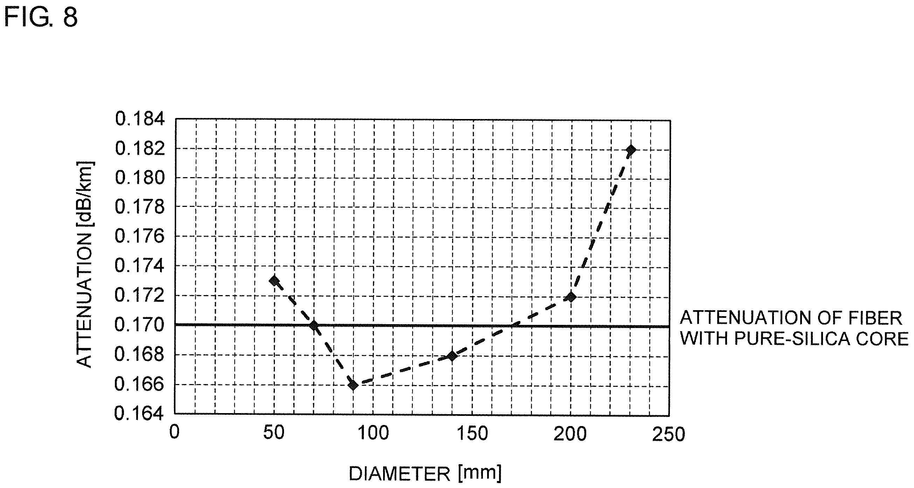

Figure 8 is a graph illustrating the relationship between the diameter of an optical fiber preform and the attenuation of an optical fiber at a wavelength of 1.55 µm when drawing is performed at a drawing speed of 1700 m/min and a drawing tension of 50 gf (0.49 N). The core of the optical fiber has an average potassium concentration of 5 atomic ppm.

As illustrated in Figs. 7 and 8, in the case where the optical fiber preform has a small diameter, an increase in drawing speed increases the attenuation of the optical fiber. In the case where the optical fiber preform has a large diameter of 200 mm or more, the residence time of the optical fiber preform in the furnace is long, thereby allowing the diffusion of potassium to proceed to increase the attenuation of the optical fiber. However, in all cases, the attenuation is 0.18 dB/km or less.

An increase in drawing speed enables the diffusion of potassium to be inhibited. However, the upper limit of the drawing speed is 3000 m/min from the viewpoint of productivity and the power of the drawing furnace. Thus, the optical fiber preform preferably has a diameter of 70 mm to 170 mm and more preferably 90 mm to 150 mm. The drawing speed is preferably in the range of 1200 m/min to 2500 m/min and more preferably 1500 m/min to 2300 m/min.

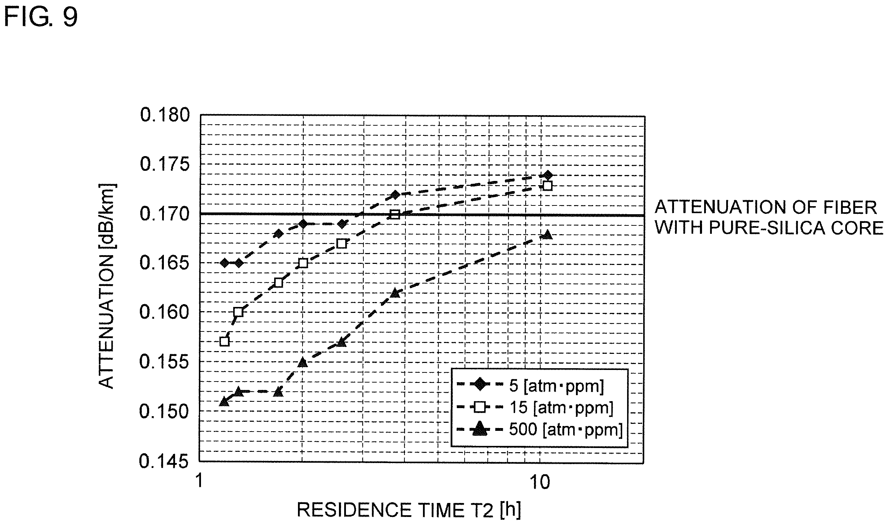

Figure 9 is a graph illustrating the relationship between residence time T₂ in the drawing furnace, which is defined in Fig. 4, and the attenuation of an optical fiber at a wavelength of 1.55 µm with the potassium concentration as a parameter. Attenuations at measurement points are described in Table IV.

**Table IV**

| Residence time T₂ | Attenuation dB/km | | |
|---|---|---|---|
| | Average potassium concentration 5 atm·ppm | Average potassium concentration 15 atm·ppm | Average potassium concentration 500 atm·ppm |
| 10.4 | 0.174 | 0.173 | 0.168 |
| 3.7 | 0.172 | 0.170 | 0.162 |
| 2.6 | 0.169 | 0.167 | 0.157 |
| 2.0 | 0.169 | 0.165 | 0.155 |
| 1.7 | 0.168 | 0.163 | 0.152 |
| 1.3 | 0.165 | 0.160 | 0.152 |
| 1.2 | 0.165 | 0.157 | 0.151 |

In this case, the optical fiber preform had a diameter of 140 mm. The residence time T₂ in the drawing furnace is preferably 4 hours or less and more preferably 3 hours or less.

### Example 1

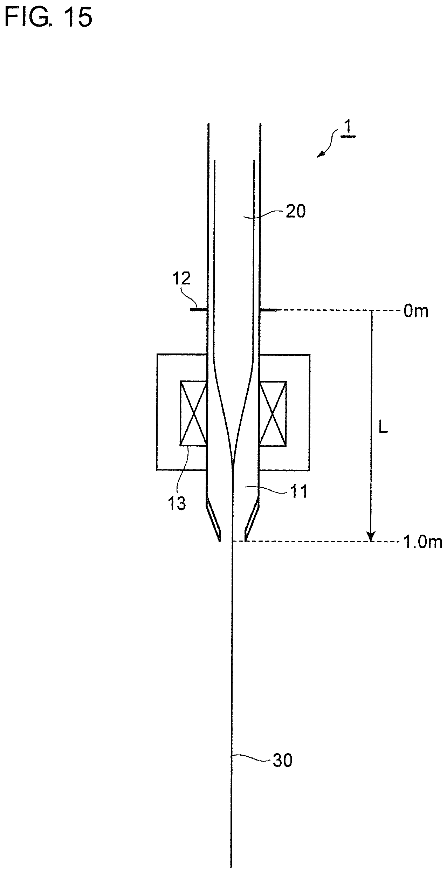

Optical fiber preforms each including a core part that has an average potassium concentration of 5 atomic ppm were drawn with a drawing apparatus illustrated in Fig. 15. The drawing furnace 11 had a length of 1.0 m. In this case, attenuations of the optical fiber preforms having different sizes (diameters) are described in Table V.

**Table V**

| Drawing speed m/min | Attenuation dB/km | | | | |
|---|---|---|---|---|---|
| | 200 (mm, in diameter) | 140 (mm, in diameter) | 90 (mm, in diameter) | 70 (mm, in diameter) | 50 (mm, in diameter) |
| 300 | 0.165 | 0.166 | 0.168 | 0.171 | 0.173 |
| 600 | 0.166 | 0.167 | 0.168 | 0.171 | 0.172 |
| 800 | 0.166 | 0.167 | 0.168 | 0.172 | 0.174 |
| 1000 | 0.166 | 0.168 | 0.166 | 0.171 | 0.176 |
| 1200 | 0.168 | 0.168 | 0.166 | 0.170 | 0.174 |

The drawing furnace has a short length, so that the resulting fiber is readily exposed to air. It is thus speculated that the length of time the fiber is maintained at 1500°C or higher is reduced. Hence, the residence time in the furnace can be reduced even when the optical fiber preforms are drawn at low speed, thereby reducing the attenuation.

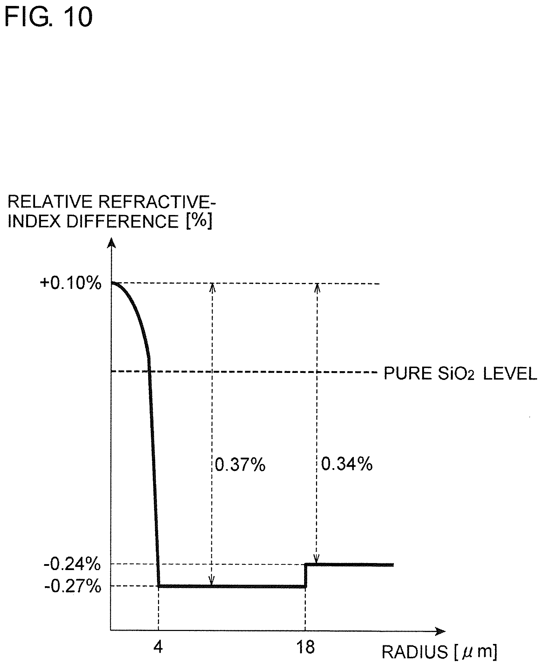

Each of the optical fibers in Example 1 had a refractive index profile (the vertical axis representing the relative refractive-index difference with respect to the refractive index of pure SiO₂) illustrated in Fig. 10. The optical fibers had characteristics as described in Table VI.

**Table VI**

| | | Example 1 | Example 2 |
|---|---|---|---|
| Chromatic dispersion at 1550 nm | ps/nm/km | +15.7 - +16.0 | +21.1 |
| Dispersion slope at 1550 nm | ps/nm²/km | +0.054 - +0.056 | +0.061 |
| Zero-dispersion wavelength d₀ | nm | 1308 - 1312 | |
| Dispersion slope at d₀ | ps/nm²/km | +0.081 - +0.084 | |
| Effective area at 1550 nm | µm² | 81 - 84 | 141 |
| Mode field diameter at 1550 nm | µm | 10.0 - 10.4 | 12.8 |
| Mode field diameter at 1310 nm | µm | 8.9 - 9.3 | |
| Fiber cutoff wavelength (2 m) | nm | 1290 - 1330 | 1580 |
| Cable cutoff wavelength (22 m) | nm | 1210 - 1250 | 1480 |
| Polarization mode dispersion (C & L bands) | ps/√km | 0.05 - 0.10 | 0.01 |
| Nonlinear coefficient (at 1550 nm, random polarization state) | (W·km)⁻¹ | 1.0 - 1.2 | 0.6 |

As described above, the resulting optical fibers had low attenuations and other satisfactory characteristics.

### Example 2

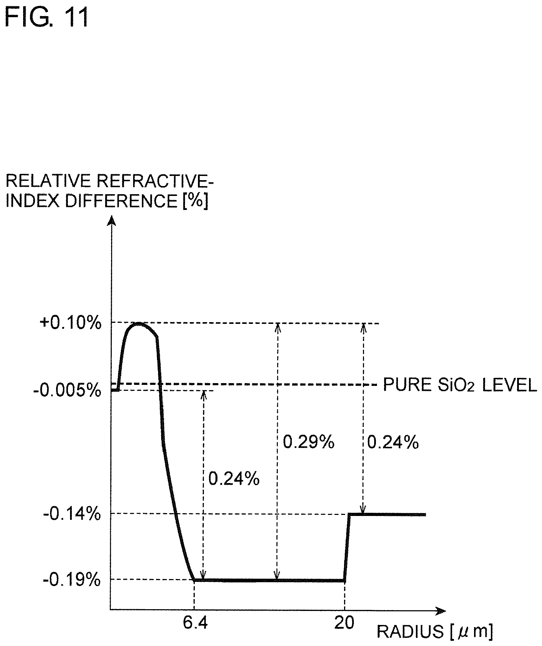

An optical fiber in Example 2 was produced by drawing an optical fiber preform at a drawing speed of 1700 m/min and a drawing tension of 50 gf (0.49 N), the optical fiber preform having a diameter of 125 mm, a potassium-containing core part, and a refractive index profile different from that in Example 1. The optical fiber had a refractive index profile (the vertical axis representing the relative refractive-index difference with respect to the refractive index of pure SiO₂) as illustrated in Fig. 11. The optical fiber had characteristics as described in Table VI. The core had an average potassium concentration of 5 atomic ppm. The attenuation (at a wavelength of 1300 nm) was 0.280 dB/km. The attenuation (at a wavelength of 1380 nm) was 0.320 dB/km. The attenuation (at a wavelength of 1550 nm) was 0.155 dB/km. As described above, the resulting optical fiber had a low attenuation and other satisfactory characteristics.

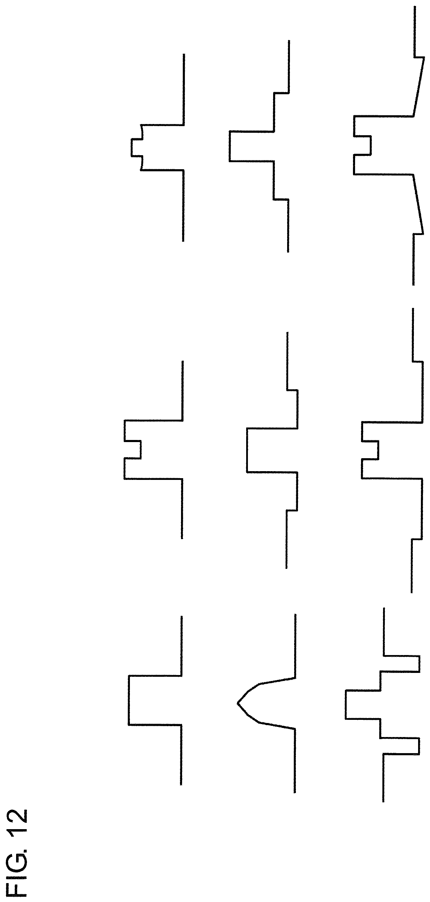

The core may have a diameter of 6 µm to 20 µm. The relative refractive-index difference between the core and the cladding may be in the range of 0.2% to 0.5%. When the cladding contains fluorine, the average refractive index of the cladding is lower than the refractive index of the core, the core is made of silica-based glass which contains an alkali metal element as well as chlorine and fluorine elements, which are halogens, and the halogen concentration is the highest of all the additional elements in the core, the attenuation is reduced. Furthermore, in the optical fiber preform, each of the core part and the cladding part may have a refractive-index structure. For example, while refractive index profiles as illustrated in Fig. 12 may be used, the present invention is not limited thereto.

## Claims

1. A method for producing an optical fiber, comprising:
drawing a silica-based optical fiber preform into an optical fiber,
the optical fiber preform including a core part and a cladding part, the core part containing a halogen element and an alkali metal element, and the cladding part containing fluorine and chlorine, the optical fiber including a glass portion and resin coating portion, the glass portion including a core,
wherein a force applied to the glass portion during the drawing is in the range of 0.29 N to 1.47 N, and
the average concentration of an additive element other than the alkali metal element or the halogen atom in the core part is equal to or lower than the average concentration of the halogen element in the core part,
**characterized in that** the core part of the optical fiber preform has an average concentration of the alkali metal element of 5 atomic ppm or more and 500 atomic ppm or less,
that, in the drawing of the optical fiber preform, the time during which an individual position of the optical fiber preform is maintained at 1500°C or higher is 110 minutes or less, and
that the core of the glass portion of the optical fiber is under residual stress which is a compressive stress of 130 MPa or less.

2. The method for producing an optical fiber according to Claim 1,
wherein the average concentration of the halogen element in the core part of the optical fiber preform is in the range of 1,000 atomic ppm to 20,000 atomic ppm.

3. The method for producing an optical fiber according to Claim 1 or 2,
wherein the alkali metal element is potassium.

4. The method for producing an optical fiber according to any one of Claims 1 to 3,
wherein the drawing speed during the drawing of the optical fiber preform is 1200 m/min or more.

5. The method for producing an optical fiber according to Claim 4,
wherein the drawing speed during the drawing of the optical fiber preform is 2500 m/min or less.

6. The method for producing an optical fiber according to any one of Claims 1 to 5,
wherein the optical fiber preform has a diameter of 70 mm to 170 mm.

7. The method for producing an optical fiber according to any one of Claims 1 to 6,
wherein in the drawing of the optical fiber preform, the drawn glass fiber having a diameter of 200 µm or less is heated at 1500°C or higher for 0.3 seconds or less, and
wherein the optical fiber preform stays in a drawing furnace for 4 hours or less.

8. The method for producing an optical fiber according to any one of Claims 1 to 7,
wherein any position of the optical fiber preform stays in the drawing furnace for 4 hours or less.

## Patentansprüche

1. Verfahren zur Herstellung einer optischen Faser, umfassend:
Ziehen einer optischen Faservorform auf Silikatbasis zu einer optischen Faser,
wobei die optische Faservorform einen Kernteil und einen Mantelteil einschliesst, der Kernteil ein Halogenelement und ein Alkalimetallelement enthält und der Mantelteil Fluor und Chlor enthält, die optische Faser einen Glasbereich und einen Harzbeschichtungsbereich einschliesst, der Glasbereich einen Kern einschliesst,
wobei die während des Ziehens an dem Glasbereich angelegte Kraft im Bereich von 0,29 bis 1,47 N liegt, und
die durchschnittliche Konzentration eines anderen Zusatzelements als dem Alkalimetallelement oder dem Halogenatom im Kernteil gleich oder niedriger als die durchschnittliche Konzentration des Halogenelements im Kernteil ist,
**dadurch gekennzeichnet,**
**dass** der Kernteil der optischen Faservorform eine durchschnittliche Konzentration an Alkalimetallelementen von 5 Atom-ppm oder mehr und 500 Atom-ppm oder weniger aufweist,
**dass** beim Ziehen der optischen Faservorform, die Zeit, während der eine beliebige Position der optischen Faservorform bei 1.500°C oder höher aufrechterhalten wird, 110 Minuten oder weniger beträgt, und
**dass** der Kern des Glasbereichs der optischen Faser unter Restspannung steht, die eine Druckspannung von 130 MPa oder weniger ist.

2. Verfahren zur Herstellung einer optischen Faser gemäss Anspruch 1, wobei die durchschnittliche Konzentration des Halogenelements im Kernteil der optischen Faservorform im Bereich von 1.000 bis 20.000 Atom-ppm liegt.

3. Verfahren zur Herstellung einer optischen Faser gemäss Anspruch 1 oder 2, wobei das Alkalimetallelement Kalium ist.

4. Verfahren zur Herstellung einer optischen Faser gemäss irgendeinem der Ansprüche 1 bis 3, wobei die Ziehgeschwindigkeit während des Ziehens der optischen Faservorform 1.200 m/min oder mehr beträgt.

5. Verfahren zur Herstellung einer optischen Faser gemäss Anspruch 4, wobei die Ziehgeschwindigkeit während des Ziehens der optischen Faservorform 2.500 m/min oder weniger beträgt.

6. Verfahren zur Herstellung einer optischen Faser gemäss irgendeinem der Ansprüche 1 bis 5, wobei die optische Faservorform einen Durchmesser von 70 bis 170 mm aufweist.

7. Verfahren zur Herstellung einer optischen Faser gemäss irgendeinem der Ansprüche 1 bis 6,
wobei beim Ziehen der optischen Faservorform die gezogene Glasfaser, die einen Durchmesser von 200 µm oder weniger aufweist, bei 1.500°C oder höher während 0,3 Sekunden oder weniger erwärmt wird, und
wobei die optische Faservorform während 4 Stunden oder weniger in einem Ziehofen verbleibt.

8. Verfahren zur Herstellung einer optischen Faser gemäss irgendeinem der Ansprüche 1 bis 7, wobei jede Stelle der optischen Faservorform für 4 Stunden oder weniger im Ziehofen verbleibt.

## Revendications

1. Procédé pour produire une fibre optique, comprenant :
étirer une préforme de fibre optique à base de silice en une fibre optique,
la préforme de fibre optique incluant une partie noyau et une partie de gaine, la
partie noyau contenant un élément halogène et un élément métal alcalin et, la partie de
gaine contenant du fluor et du chlore, la fibre optique incluant une partie de verre et une
partie de revêtement de résine, la partie de verre incluant une partie noyau,
dans lequel une force appliquée à la partie de verre pendant l'étirage est comprise dans la plage de 0,29 N à 1,47 N, et
la concentration moyenne d'un élément additif autre que l'élément métal alcalin ou l'atome d'halogène dans la partie noyau est égale ou inférieure à la concentration moyenne de l'élément halogène dans la partie noyau,
**caractérisé en ce que** la partie noyau de la préforme de fibre optique présente une concentration moyenne de l'élément métal alcalin de 5 ppm atomique ou plus et 500 ppm atomique ou moins,
que pour étirer la préforme de fibre optique, le temps pendant lequel une position individuelle de la préforme de fibre optique est maintenue à 1 500°C ou plus est de 110 minutes ou moins, et
que le noyau de la partie de verre de la fibre optique est sous une contrainte résiduelle qui est une contrainte de compression de 130 MPa ou moins.

2. Procédé pour produire une fibre optique selon la revendication 1, dans lequel la concentration moyenne de l'élément halogène dans la partie noyau de la préforme de fibre optique est comprise dans la plage de 1000 ppm atomique à 20 000 ppm atomique.

3. Procédé pour produire une fibre optique selon la revendication 1 ou 2, dans lequel l'élément métal alcalin est le potassium.

4. Procédé pour produire une fibre optique selon l'une quelconque des revendications 1 à 3, dans lequel la vitesse d'étirage pendant l'étirage de la préforme de fibre optique est de 1200 m/min ou plus.

5. Procédé pour produire une fibre optique selon la revendication 4, dans lequel la vitesse d'étirage pendant l'étirage de la préforme de fibre optique est de 2500 m/min ou moins.

6. Procédé pour produire une fibre optique selon l'une quelconque des revendications 1 à 5, dans lequel la préforme de fibre optique présente un diamètre de 70 mm à 170 mm.

7. Procédé pour produire une fibre optique selon l'une quelconque des revendications 1 à 6, dans lequel durant l'étirage de la préforme de fibre optique, la fibre de verre étirée présentant un diamètre de 200 µm ou moins est chauffée à 1 500 °C ou plus pendant 0,3 seconde ou moins, et
dans lequel la préforme de fibre optique reste dans un four d'étirage pendant 4 heures ou moins.

8. Procédé pour produire une fibre optique selon l'une quelconque des revendications 1 à 7, dans lequel toute position de la préforme de fibre optique reste dans le four d'étirage pendant 4 heures ou moins.
